# EUROPÄISCHE PATENTSCHRIFT

(11) **EP 3 037 692 B1**
(45) Veröffentlichungstag und Bekanntmachung des Hinweises auf die Patenterteilung: **07.02.2018**
(21) Anmeldenummer: 14200203.9
(22) Anmeldetag: 23.12.2014
(51) Int. Cl.: F16H 47/04, F16H 3/72, F16H 37/08, F16H 37/10

(54) **Leistungsverzweigungsgetriebe für ein Kraftfahrzeug**
Power split drive for a motor vehicle
Boîte de vitesses à division de puissance pour un véhicule automobile

(43) Veröffentlichungstag der Anmeldung: 29.06.2016
(73) Patentinhaber: NAF Neunkirchener Achsenfabrik AG, 91077 Neunkirchen (DE)
(72) Erfinder: Dziuba, Peter, 88699 Frickingen (DE); Häglsperger, Josef, 84140 Gangkofen (DE); Bauer, Josef, 85405 Nandlstadt (DE); Schnabel, Bernhard, 82319 Starnberg (DE)
(74) Vertreter: Hofstetter, Schurack & Partner

(56) Entgegenhaltungen:
- EP-A1- 2 253 867
- EP-A1- 2 280 192
- EP-A1- 2 461 073
- DE-A1- 3 817 292
- US-A1- 2014 248 986
- US-B1- 7 892 130

## Beschreibung

Die Erfindung betrifft ein Leistungsverzweigungsgetriebe für ein Kraftfahrzeug, insbesondere für eine selbstfahrende Arbeitsmaschine.

Leistungsverzweigungsgetriebe dienen zur Leistungsübertragung über einen rein mechanischen und einen hydrostatischen bzw. elektrischen Zweig. Damit eignen sie sich insbesondere für Kraftfahrzeuge wie selbstfahrende Arbeitsmaschinen, Radlader oder dergleichen, die einerseits unter hoher Last anfahren können müssen, andererseits aber auch eine ausreichende Mindestgeschwindigkeit zur Fortbewegung auf öffentlichen Straßen aufweisen sollen. Ein gattungsgemäßes Leistungsverzweigungsgetriebe umfasst dazu eine Antriebswelle, welche zum Einspeisen von Drehmoment mit einer Brennkraftmaschine verbunden ist. Weiterhin umfasst das Leistungsverzweigungsgetriebe einen mechanischen ersten Zweig, der eine Planetengetriebeanordnung mit zwei Sonnenrädern unterschiedlichen Durchmessers, einem Hohlrad und einer Stegwelle umfasst, auf der Doppelplanetenräder angeordnet sind, die mit den Sonnenrädern und mit dem Hohlrad kämmen. Zumindest eines der Sonnenräder ist mit der Antriebswelle gekoppelt. Weiterhin umfasst ein solches Leistungsverzweigungsgetriebe einen stufenlos verstellbaren zweiten Zweig, der zumindest teilweise über die Planetengetriebeanordnung mit dem ersten Zweig verbindbar ist und zwei, drei oder mehr verstellbare hydraulische und/oder elektrische rotatorische Energiewandler umfasst, die miteinander energetisch koppelbar und jeweils in beide Richtungen entweder als Motor oder im Fall eines Hydromotors als Pumpe bzw. im Fall eines Elektromotors als Generator betreibbar sind. Schließlich umfasst ein derartiges Leistungsverzweigungsgetriebe eine Abtriebswelle, auf die der erste Zweig und der zweite Zweig gekoppelt werden. Üblicherweise stellen solche Leistungsverzweigungsgetriebe, wie sie beispielsweise in der DE 2904572 A1 beschrieben sind, wenigstens einen Vorwärtsfahrbereich und einen Rückwärtsfahrbereich sowie einen Durchtrieb zu einem Zapfwellengetriebe zur Verfügung.

Nachteilig an dem bekannten Leistungsverzweigungsgetriebe ist sein Verhalten beim Rückwärtsfahren. Ausgangssituation ist der Stillstand des Kraftfahrzeugs. Zum Rückwärtsfahren in einem ersten Rückwärtsfahrbereich wird nun eine der Pumpen in umgekehrter Richtung als beim Vorwärtsfahren ausgeschwenkt. Hierdurch dreht der andere Hydrostat ebenfalls rückwärts und überlagert seine nun umgekehrte Drehbewegung am Abtrieb der Planetengetriebeanordnung. Das Fahrzeug fährt nun zwar rückwärts, die Planetengetriebeanordnung wird jedoch nach wie vor von der Brennkraftmaschine in "Vorwärts-Richtung" angetrieben. Ein Teil der Leistung fließt dadurch nicht dem Abtrieb zu, sondern wird als Blindleistung in der verspannten Planetengetriebeanordnung gehalten. Je schneller das Kraftfahrzeug rückwärts fährt, desto größer wird dieser Blindleistungsanteil, so dass eine Rückwärtsfahrt im einem mit dem zweiten Vorwärtsfahrbereich korrespondierenden Rückwärtsfahrbereich üblicherweise nicht möglich ist. Dieser Blindleistungsanteil übersteigt bei schneller Rückwärtsfahrt sogar die Eintriebsleistung und reduziert somit die Lebensdauer der Energiewandler sowie der betroffenen Zahnräder und Lagerstellen. Zudem erreicht ein mit einem derartigen Leistungsverzweigungsgetriebe ausgerüstetes Kraftfahrzeug rückwärts maximal ca. 1/3 der Vorwärts-Höchstgeschwindigkeit, weil nur in einem mit dem ersten Vorwärtsfahrbereich korrespondierenden ersten Rückwärtsfahrbereich, aber nicht in einem mit einem zweiten Vorwärtsfahrbereich korrespondierenden zweiten Rückwärtsfahrbereich gefahren werden kann. Die zunehmenden Leistungsverluste beim Rückwärtsfahren resultieren zudem in einer zunehmend nachlassenden Zugkraft, was zu Problemen bei rückwärts fahrenden Kraftfahrzeugen führen kann. Beispiele sind das Einfahren in eine Silage bei Traktoren sowie eine nicht ausreichende Zugkraft bei rückwärts fahrenden Bau- und Forstmaschinen. Bei Anwendungen mit häufiger Rückwärtsfahrt macht sich der Blindleistungsanteil zudem durch erhöhten Kraftstoffverbrauch negativ bemerkbar. Dies wird beispielsweise bei Traktoren akzeptiert, bei fahrbaren Arbeitsmaschinen wie beispielsweise Radladern und Forstmaschinen ist eine solche Einschränkung jedoch oftmals nicht hinnehmbar.

Die US 7,892,130 B1 offenbart ein Leistungsverzweigungsgetriebe nach dem Oberbegriff des Anspruchs 1. Aufgabe der vorliegenden Erfindung ist es, ein Leistungsverzweigungsgetriebe zu schaffen, welches wenigstens einen blindleistungsfreien Rückwärtsfahrbereich zur Verfügung stellt.

Die Aufgabe wird erfindungsgemäß durch ein Leistungsverzweigungsgetriebe mit den Merkmalen des Patentanspruchs 1 gelöst. Vorteilhafte Ausgestaltungen mit zweckmäßigen Weiterbildungen des Leistungsverzweigungsgetriebes sind in den Unteransprüchen angegeben.
Ein erfindungsgemäßes Leistungsverzweigungsgetriebe, welches ohne Blindleistung rückwärts bewegt werden kann, umfasst zwischen der Antriebswelle und der Abtriebswelle zumindest eine erste Reversierstufe zum Wechseln zwischen zumindest einem ersten Vorwärtsfahrbereich und zumindest einem ersten Rückwärtsfahrbereich, wobei die Reversierstufe die Drehrichtungen der Sonnenräder, des Hohlrads und der Stegwelle beim Wechseln zwischen dem ersten Vorwärtsfahrbereich und dem ersten Rückwärtsfahrbereich alle umkehrt. Mit anderen Worten ist eine mechanische Reversierstufe vorgesehen, welche beim Wechseln zwischen Vorwärtsfahrbereich und Rückwärtsfahrbereich die relativen Drehrichtungen der Sonnenräder, des Hohlrads und der Stegwelle zueinander gleichsinnig hält, so dass nicht einzelne Komponenten der Planetengetriebeanordnung reversiert werden, während andere Komponenten nicht reversiert werden. Hierdurch wird zuverlässig ausgeschlossen, dass es beim Wechsel zwischen Vorwärts- und Rückwärtsfahrt in der Planetengetriebeanordnung zu unerwünschten Drehrichtungsüberlagerungen kommt, so dass das erfindungsgemäße Leistungsverzweigungsgetriebe ohne Blindleistungsverluste wahlweise zumindest in einem ersten Vorwärtsfahrbereich sowie in einem ersten Rückwärtsfahrbereich bewegt werden kann. Dabei ist es grundsätzlich ausreichend, wenn das erfindungsgemäße Leistungsverzweigungsgetriebe mit nur einer Brennkraftmaschine und nur zwei Energiewandlern eines Kraftfahrzeugs verbindbar ist, die unabhängig voneinander als Hydromotor oder als Elektromotor ausgebildet sein können und dementsprechend als Motor oder Pumpe bzw. Generator fungieren können. Weiterhin kann es vorgesehen sein, dass der erste Energiewandler mit dem Hohlrad der Planetengetriebeanordnung koppelbar ist und/oder dass der zweite Energiewandler mit dem zweiten Sonnenrad der Planetengetriebeanordnung koppelbar ist. Das erfindungsgemäße Leistungsverzweigungsgetriebe eignet sich insbesondere für Kraftfahrzeuge wie selbstfahrende Arbeitsmaschinen.

In einer vorteilhaften Ausgestaltung der Erfindung ist die erste Reversierstufe am Abtrieb der Planetengetriebeanordnung angeordnet und insbesondere mit der Stegwelle der Planetengetriebeanordnung gekoppelt. Dies hat den Vorteil, dass das Leistungsverzweigungsgetriebe rückwärts genauso wie vorwärts funktioniert, da lediglich die Drehrichtung des gesamten Leistungsverzweigungsgetriebes am Abtrieb durch die erste Reversierstufe umgekehrt wird, so dass keinerlei Drehrichtungsumkehr bei den einzelnen Komponenten der Planetengetriebeanordnung stattfindet. Damit kann die erste Reversierstufe auch bei bereits bestehenden Leistungsverzweigungsgetrieben auf einfache Weise als optionale Zusatzfunktion ergänzt werden.

In einer weiteren vorteilhaften Ausgestaltung der Erfindung ist vorgesehen, dass zwischen einer Abtriebsseite der Planetengetriebeanordnung und der Abtriebswelle wenigstens ein erstes Kupplungselement und ein zweites Kupplungselement vorgesehen sind, wobei im ersten Vorwärtsfahrbereich Drehmoment über das erste Kupplungselement und im ersten Rückwärtsfahrbereich Drehmoment über das zweite Kupplungselement zu übertragen ist. Hierdurch kann das vom Motor bzw. den Energiewandlern gelieferte Drehmoment durch Schalten der Kupplungselemente fahrtrichtungsabhängig blindleistungsfrei entweder über das erste Kupplungselement oder über das zweite Kupplungselement an die Abtriebwelle geleitet werden. Die Kupplungselemente können unabhängig voneinander beispielsweise als Klauenkupplung, Lamellenkupplung oder dergleichen ausgebildet sein.

Weitere Vorteile ergeben sich, indem die erste Reversierstufe eine erste Zahnradpaarung mit einer geraden Anzahl gepaarter Zahnräder und eine zweite Zahnradpaarung mit einer ungeraden Anzahl gepaarter Zahnräder umfasst und ausgebildet ist, Drehmoment beim Wechseln zwischen Vorwärtsfahrbereich und Rückwärtsfahrbereich entweder über die erste oder über die zweite Zahnradpaarung von der Planetengetriebeanordnung an die Abtriebswelle zu übertragen. Dies stellt eine konstruktiv besonders einfache, kompakte und kostengünstige Möglichkeit zur Realisierung eines blindleistungsfreien Wechsels zwischen Vorwärts- und Rückwärtsfahrtbereich dar.

In einer weiteren vorteilhaften Ausgestaltung der Erfindung ist die erste Reversierstufe als vormontierbare Modulbaugruppe ausgebildet. Hierdurch kann die erste Reversierstufe als Teilkomponente des Leistungsverzweigungsgetriebes vorgefertigt und beispielsweise als Zusatzoption oder Nachrüstlösung für das Leistungsverzweigungsgetriebe bereitgestellt werden, das somit konstruktiv zumindest weitgehend unverändert bleiben kann. Dies hat den Vorteil, dass unterschiedlich ausgebildete Leistungsverzweigungsgetriebe schnell und einfach mit einer jeweils optimal angepassten Reversierstufe versehen werden können. Die erste Reversierstufe kann dabei in einem zugeordneten Gehäuse bzw. Teilgehäuse aufgenommen sein. Ebenso genügt in Schadensfällen entweder der Austausch der Modulbaugruppe oder des restlichen Leistungsverzweigungsgetriebes, was beispielsweise die Reparatur von selbstfahrenden Arbeitsmaschinen entsprechend vereinfacht.

Weiterhin kann es grundsätzlich vorgesehen sein, dass die erste Reversierstufe das erste und das zweite Kupplungselement umfasst, mittels welchen beim Wechseln zwischen Vorwärtsfahrbereich und Rückwärtsfahrbereich entweder die erste Zahnradpaarung oder die zweite Zahnradpaarung zum Übertragen von Drehmoment mit der Planetengetriebeanordnung koppelbar ist. Da der Wechsel zwischen Vorwärts- und Rückwärtsfahrbereich im Stillstand des Kraftfahrzeugs geschieht, können die Kupplungselemente als kostengünstige und kompakte Klauenkupplungen ausgeführt sein. Alternativ können aber auch in diesem Fall andere Kupplungstypen wie z.B. Lamellenkupplungen vorgesehen sein.

Weitere Vorteile ergeben sich, indem zwischen der ersten Reversierstufe und der wenigstens einen Abtriebwelle ein vorzugsweise mittels einer Differentialsperre sperrbares Differentialgetriebe vorgesehen ist, mittels welchem ein Drehmoment zwischen einer ersten Abtriebswelle und einer zweiten Abtriebswelle aufteilbar ist. Hierdurch ist eine funktionelle Erweiterung des Leistungsverzweigungsgetriebes mit einem als Achs-Verteilergetriebe fungierenden Differentialgetriebe ermöglicht, mittels welchem das Drehmoment beispielsweise auf eine Vorder- und eine Hinterachse eines zugeordneten Fahrzeugs verteilt werden kann. Vorzugsweise umfasst das Differentialgetriebe eine Differentialsperre, um durch starre Kopplung von Vorder- und Hinterachse zu verhindern, dass das Kraftfahrzeug aufgrund von Schlupf an einem der Räder verlangsamt wird oder gar zum Stillstand kommt.
In einer weiteren vorteilhaften Ausgestaltung der Erfindung ist vorgesehen, dass der erste Energiewandler und der zweite Energiewandler beim Wechseln zwischen dem ersten Vorwärtsfahrbereich und einem zweiten Vorwärtsfahrbereich ihre Funktion tauschen und/oder dass der erste Energiewandler und der zweite Energiewandler beim Wechseln zwischen dem ersten Vorwärtsfahrbereich und dem ersten Rückwärtsfahrbereich ihre Funktion beibehalten und/oder dass der erste Energiewandler und der zweite Energiewandler im ersten Vorwärtsfahrbereich und im ersten Rückwärtsfahrbereich jeweils gleichartig betrieben werden. Hierdurch ist eine besonders einfache Steuerung des Leistungsverzweigungsgetriebes ermöglicht, da im Hinblick auf die Energiewandler nicht zwischen Vorwärts- und Rückwärtsfahrt unterschieden werden muss. Die Steuerung kann dabei grundsätzlich manuell oder vorzugsweise automatisiert erfolgen. Erfindungsgemäß ist die erste Reversierstufe ausgebildet, eine Drehrichtung des Abtriebs der Planetengetriebeanordnung relativ zu einer Drehrichtung des zweiten Energiewandlers umzukehren. Dies stellt eine konstruktiv einfache Möglichkeit zur Vermeidung von Blindleistungsverlusten dar, da mittels der ersten Reversierstufe die Drehrichtung des Abtriebs des Planetentriebs zusammen mit der Drehrichtung des Energiewandlers umgekehrt wird.
In einer weiteren vorteilhaften Ausgestaltung der Erfindung ist vorgesehen, dass der zweite Energiewandler vorzugsweise mittels einer Kupplungseinrichtung mit einer Abtriebswelle koppelbar und von der Abtriebswelle entkoppelbar ist. Mit anderen Worten ist anstelle einer direkten Kopplung des zweiten Energiewandlers mit der Stegwelle der Planetengetriebeanordnung eine Kopplung des zweiten Energiewandlers mit der Abtriebswelle vorgesehen. Hierdurch kann der mechanische Zweig reversiert werden, bevor er über den zweiten Hydrostaten wieder mit dem hydrostatischen Leistungszweig gekoppelt wird. Dies bietet den Vorteil, dass nicht die Summe der Drehmomente aller Antriebsmotoren an einer Stelle im Leistungsverzweigungsgetriebe reversiert werden muss, sondern dass der mechanische und der hydrostatische bzw. elektrische Zweig unabhängig voneinander reversiert und erst nach der Reversierung wieder zusammengeführt werden können. Hierdurch kann das Leistungsverzweigungsgetriebe entsprechend kompakter ausgebildet werden. Grundsätzlich kann dabei wenigstens eine Kupplungseinrichtung vorgesehen sein, mittels welcher der zweite Energiewandler mit der Abtriebswelle koppelbar oder von der Abtriebswelle entkoppelbar ist. Hierdurch ist eine einfache Möglichkeit zur wahlweisen Einkopplung des Drehmoments des zweiten Energiewandlers gegeben, beispielsweise beim Wechsel zwischen unterschiedlichen Fahrstufen.

In einer weiteren vorteilhaften Ausgestaltung der Erfindung ist eine zweite Reversierstufe zum Wechseln zwischen dem ersten Rückwärtsfahrbereich und einem zweiten Rückwärtsfahrbereich vorgesehen. Hierdurch kann ein zweiter Rückwärtsfahrbereich bereitgestellt werden, wodurch das Fahrzeug mit gleicher Geschwindigkeit und ohne zusätzlich auftretende Blindleistung wahlweise vorwärts oder rückwärts bewegt werden kann.

Weitere Vorteile ergeben sich, indem die zweite Reversierstufe ausgebildet ist, eine Drehrichtung des zweiten Sonnenrads relativ zur Drehrichtung des zweiten Hydrostaten umzukehren. Dies erlaubt eine einfache Anpassung der Drehrichtungen des ersten und des zweiten Hydrostaten beim Durchfahren des zweiten Rückwärtsfahrbereichs.

Eine besonders bauraumsparende Anordnung wird in weiterer Ausgestaltung der Erfindung dadurch erreicht, dass die zweite Reversierstufe zwischen dem zweiten Energiewandler und dem Planetengetriebeanordnung angeordnet ist.

Weiterhin hat es sich als vorteilhaft gezeigt, wenn die erste Reversierstufe dem ersten Zweig und die zweite Reversierstufe dem zweiten Zweig zugeordnet ist. Dies erlaubt eine besonders flexible und voneinander getrennte Reversierung des mechanischen und des hydraulischen bzw. elektrischen Zweigs des Leistungsverzweigungsgetriebes.

Weitere Vorteile ergeben sich, wenn der erste Energiewandler und der zweite Energiewandler beim Wechseln zwischen dem ersten Rückwärtsfahrbereich und dem zweiten Rückwärtsfahrbereich ihre Funktion tauschen und/oder wenn der erste Energiewandler im zweiten Rückwärtsfahrbereich umgekehrt ausgeschwenkt wird als im zweiten Vorwärtsfahrbereich. Dies stellt eine konstruktiv einfache Möglichkeit zum Wechseln zwischen erstem und zweitem Rückwärtsfahrbereich dar.
Eine weitere vorteilhafte Möglichkeit zur bauraumsparenden Ausgestaltung des Leistungsverzweigungsgetriebes wird dadurch erreicht, dass wenigstens zwei Kupplungselemente in einer gemeinsamen Baugruppe zusammengefasst sind. Durch diese modulare Bauweise werden zudem die Montage und Demontage der wenigstens zwei Kupplungen erleichtert. Weiterhin können unterschiedliche Kupplungskombinationen vorgefertigt bereitgestellt und in Abhängigkeit der Ausgestaltung und des jeweiligen Einsatzzwecks des Leistungsverzweigungsgetriebes verbaut werden. Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung eines ersten Ausführungsbeispiels eines nicht beanspruchten Leistungsverzweigungsgetriebes;
- Fig. 2: eine Prinzipdarstellung eines zweiten Ausführungsbeispiels eines erfindungsgemäßen Leistungsverzweigungsgetriebes;
- Fig. 3: eine Prinzipdarstellung eines dritten Ausführungsbeispiels des erfindungsgemäßen Leistungsverzweigungsgetriebes; und
- Fig. 4: eine Prinzipdarstellung eines vierten Ausführungsbeispiels des erfindungsgemäßen Leistungsverzweigungsgetriebes.

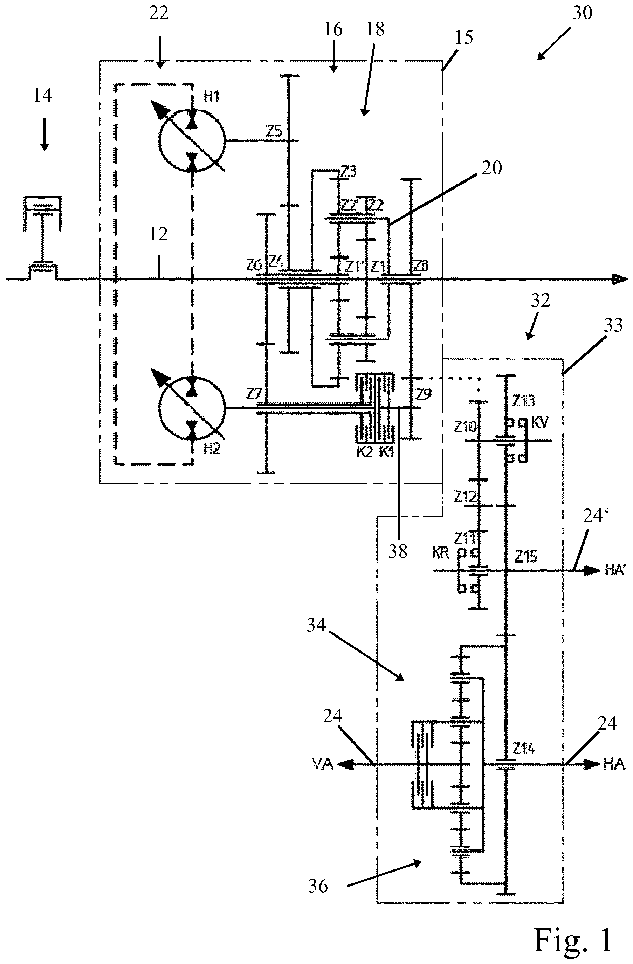

Fig. 1 zeigt eine Prinzipdarstellung eines ersten Ausführungsbeispiels eines nicht beanspruchten Leistungsverzweigungsgetriebes 30, das beispielsweise in Kraftfahrzeuge wie selbstfahrende Arbeitsmaschinen, Radlader oder dergleichen eingebaut sein kann. Das Leistungsverzweigungsgetriebe 30 umfasst eine Antriebswelle 12, welche zum Einspeisen von Drehmoment mit einer Brennkraftmaschine 14 des Kraftfahrzeugs (nicht gezeigt) verbunden ist und für einen grundsätzlich optionalen Durchtrieb vollständig durch ein Gehäuse 15 geführt ist. Weiterhin umfasst das Leistungsverzweigungsgetriebe 30 einen mechanischen ersten Zweig 16, der eine Planetengetriebeanordnung 18 mit zumindest zwei Sonnenrädern Z1, Z1' unterschiedlichen Durchmessers, einem Hohlrad Z3 und einer Stegwelle 20 umfasst, auf der Doppelplanetenräder Z2, Z2' angeordnet sind, die mit den Sonnenrädern Z1, Z1' und mit dem Hohlrad Z3 kämmen, wobei zumindest das Sonnenrad Z1 mit der Antriebswelle 12 gekoppelt ist. Weiterhin umfasst das Leistungsverzweigungsgetriebe 30 einen vorliegend hydraulischen zweiten Zweig 22, der zumindest teilweise über die Planetengetriebeanordnung 18 mit dem mechanischen Zweig 16 verbindbar ist und zwei vorliegend als verstellbare Hydrostaten ausgebildete Energiewandler H1, H2 umfasst, die miteinander energetisch koppelbar und jeweils in beide Richtungen als Motor oder Pumpe betreibbar sind. Die Energiewandler H1, H2 können unabhängig voneinander auch als Elektromotor ausgebildet sein, der entweder als Motor oder als Generator betreibbar ist. Alternativ oder zusätzlich können auch pneumatische Energiewandler vorgesehen sein. In einfachster Ausgestaltung umfasst das mit dem Leistungsverzweigungsgetriebe 30 ausgerüstete Kraftfahrzeug aber lediglich eine Brennkraftmaschine 14 und lediglich zwei Energiewandler H1, H2.
Ferner umfasst das Leistungsverzweigungsgetriebe 30 eine Abtriebswelle 24, auf die der erste Zweig 16 und der zweite Zweig 22 mittels der Zahnradstufe Z8/Z9 gekoppelt werden kann. Beim dem Leistungsverzweigungsgetriebe 30 ist das Abtriebsrad Z8 an der Stegwelle 20 der Planetengetriebeanordnung 18 mit dem Zahnrad Z10 einer ersten Reversierstufe 32 in Eingriff gebracht oder zumindest gekoppelt. Die erste Reversierstufe 32 ist ihrerseits als vormontierbare Modulbaugruppe ausgebildet und in einem separaten Gehäuse 33 aufgenommen, welches mit dem Gehäuse 15 verbunden ist.

Für einen ersten Vorwärtsfahrbereich wird in der ersten Reversierstufe 32 eine erste Kupplungseinrichtung KV geschlossen und eine zweite Kupplungseinrichtung KR geöffnet. Damit dreht sich eine erste Abtriebswelle 24' beim Zahnrad Z15 gleichsinnig mit dem Zahnrad Z8 der Planetengetriebeanordnung 18. Die ungerade Zahnradpaarung Z10/Z12/Z11 dreht leer mit und überträgt keine Leistung.

Für einen ersten Rückwärtsfahrtbereich wird die Kupplungseinrichtung KV geöffnet, während die Kupplungseinrichtung KR geschlossen wird. Die Abtriebswelle 24' beim Zahnrad Z15 dreht nun gegensinnig mit dem Zahnrad Z8 der Planetengetriebeanordnung 18. Die gerade Zahnradpaarung Z13/Z15 dreht leer mit und überträgt keine Leistung.

Die Funktionen der Hydrostaten H1 und H2 sowie der Kupplungseinrichtungen K1 und K2 bleiben bei dieser Anordnung unbeeinflusst, so dass das Leistungsverzweigungsgetriebe 30 rückwärts genauso wie vorwärts blindleistungsfrei funktioniert, da die Drehrichtung des im Gehäuse 15 untergebrachten Getriebeteils am Abtrieb mittels der ersten Reversierstufe 32 vollständig umgekehrt wird. Mit anderen Worten werden die überlagerten Drehmomente des mechanischen Zweigs 16 und des hydrostatischen Zweigs 22 vor der Reversierstufe 32 zusammengeführt und anschließend gemeinsam reversiert. Damit stellt das gezeigte Leistungsverzweigungsgetriebe 30 zwei Vorwärtsgänge und zwei korrespondierende Rückwärtsgänge zur Verfügung, die blindleistungsfrei durchfahrbar sind.

Da die Umschaltung Vorwärts/Rückwärts im Stillstand geschieht, können die Kupplungseinrichtungen KV/KR zudem vorteilhaft als Klauenkupplungen ausgeführt werden. Denkbar sind aber auch andere Formen von Kupplungen wie z. B. Lamellenkupplungen. Der Abtrieb über die Abtriebswelle 24' auf die Hinterachse HA' ist vor allem für Fahrzeuge vorteilhaft, die ein vergleichsweise kurzes Stichmaß zwischen Ein- und Abtrieb benötigen.

Alternativ oder zusätzlich kann auch eine Erweiterung des Leistungsverzweigungsgetriebes 30 mit einem als Achs-Verteilergetriebe ausgebildeten Differentialgetriebe 34 vorgesehen sein. Mit Hilfe des Differentialgetriebes 34 kann ausgehend vom Zahnrad Z14 das Drehmoment über ein vorzugsweise sperrbares Planetengetriebe 36 auf eine Vorderachse VA und eine Hinterachse HA verteilt werden. Eine solche Anordnung ist vor allem für Fahrzeuge vorteilhaft, die ein längeres Stichmaß vom Eintrieb zum Abtrieb benötigen, wie z. B. Radlader.

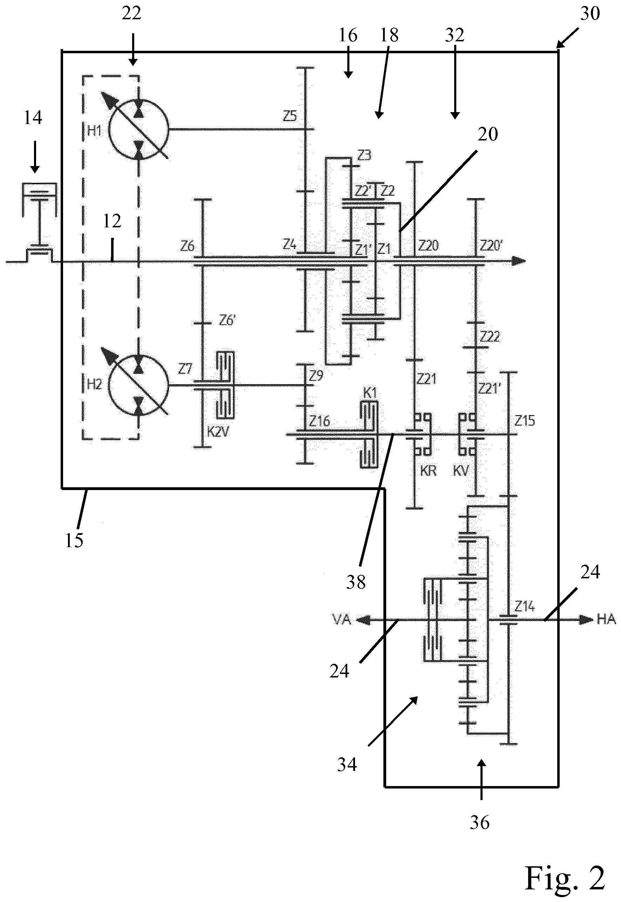

Fig. 2 zeigt eine Prinzipdarstellung eines zweiten Ausführungsbeispiels des erfindungsgemäßen Leistungsverzweigungsgetriebes 30, bei welchem die erste Reversierstufe 32 ausgebildet ist, die Drehrichtung der Stegwelle 20 der Planetengetriebeanordnung 18 (PLG) relativ zur Drehrichtung des zweiten Hydrostaten H2 umzukehren. Im Unterschied zum Ausführungsbeispiel gemäß Fig. 1 wird der zweite Hydrostat bzw. Energiewandler H2 erst nach der Reversierstufe 32 wieder mit dem mechanischen Zweig 16 gekoppelt. Mit anderen Worten werden nicht die überlagerten Drehmomente des mechanischen Zweigs 16 und des hydrostatischen Zweigs 22 gemeinsam reversiert, sondern die Reversierstufe 32 reversiert lediglich den mechanischen Zweig 16. Hierdurch wirkt ein geringeres Drehmoment auf der Reversierstufe 32, wodurch das Leistungsverzweigungsgetriebe 30 kompakter, leichter und kostengünstiger ausgebildet werden kann. Durch die erste Reversierstufe 32 wird der Abtrieb an der Stegwelle 20 der PLG 18 in zwei Zahnräder Z20 und Z20' aufgeteilt und über die Zahnräder Z21 bzw. Z22-Z21' gegen- bzw. gleichsinnig mit dem Zahnrad Z15 auf die Abtriebswelle 24 geschaltet. Die Koppelung des Hydrostaten H2 auf den Abtrieb erfolgt bei dieser Variante nicht direkt auf die Stegwelle 20 der PLG 18, sondern stattdessen über die Kupplungseinrichtung K1 auf eine Abtriebswelle 38, wo der gegebenenfalls reversierte mechanische Zweig 16 über die Kupplungseinrichtungen KV bzw. KR wieder mit dem hydrostatischen Zweig 22 gekoppelt werden kann. Dabei ist zu betonen, dass die Kupplungseinrichtung K1 auch zwischen der weiteren Kupplungseinrichtung K2V, die zur Bereitstellung eines grundsätzlich optionalen zweiten Vorwärtsgangs dient, und dem Zahnrad Z9 angeordnet werden kann.

In einem ersten Vorwärtsfahrbereich fungiert der Hydrostat H1 als Pumpe, während der Hydrostat H2 als Motor fungiert. Der Verbrennungsmotor 14 treibt die PLG 18 über das Sonnenrad Z1 an. Das Hohlrad Z3 stützt sich über die Zahnradpaarung Z4/Z5 an der Pumpe H1 ab. Der Steg 20 wirkt über die Reversierstufe 32 (Zahnradpaarungen Z20/Z21 und Z20'/Z21') als Abtrieb. Die Kupplungseinrichtung K1 wird geschlossen, während die Kupplungseinrichtung K2V geöffnet ist. Der Hydrostat H2 wird nun über die Zahnradpaarung Z9/Z16 mit dem Abtrieb der mechanischen Reversierstufe 32 verbunden. Die vorliegend eine Zahnradkette umfassende Zahnradpaarung Z1'/Z6/Z7 läuft leer mit und überträgt keine Leistung.

Bei Vorwärtsfahrt funktionieren also das in Fig. 2 gezeigte Leistungsverzweigungsgetriebe 30 und das in Fig. 1 beschriebene Ausführungsbeispiel auf ähnliche Weise. Zur Rückwärtsfahrt in einem ersten Rückwärtsfahrbereich wird im Stillstand die erste Kupplungseinrichtung KV geöffnet, während die Kupplungseinrichtung KR geschlossen wird. Wenn die Kupplungseinrichtung KR geschlossen ist, fungiert der Hydromotor H1 wiederum als Pumpe, wird nun jedoch in umgekehrter Richtung als bei Vorwärtsfahrt ausgeschwenkt. Der Hydrostat H2 wirkt damit als Motor ebenfalls in umgekehrter Drehrichtung mit dem Zahnrad Z15 auf die Abtriebswelle 24. Da jedoch mittels der Reversierstufe 32 (Z20/Z21) die Drehrichtung der PLG 18 ebenfalls umgedreht wurde, wirkt die Drehrichtung des Motors H2 nun in dieselbe Drehrichtung wie die der PLG 18. Es entsteht also keine Blindleistung mehr. Das Leistungsverzweigungsgetriebe 30 fährt nun im ersten Gang mit derselben Leistung und Funktionalität rückwärts wie vorwärts, wobei insgesamt zwei Vorwärtsgänge und ein Rückwärtsgang zur Verfügung stehen.

Die Anordnung der Reversierstufe 32 am Steg 20 der PLG 18 und die nachträgliche Einkopplung des Hydrostaten H2 sind aus mehreren Gründen vorteilhaft. Da die Kupplungen KV und KR nur den mechanischen Anteil des Drehmoments aus der PLG 18 tragen müssen, nicht jedoch zusätzlich das hohe Drehmoment des Hydrostaten H2, können sie bedeutend kleiner und leichter ausgelegt werden. Beim Umschalten der Kupplungseinrichtung KV und KR wird ferner der Abtrieb des Leistungsverzweigungsgetriebes 30 lediglich kurzzeitig von der PLG 18 getrennt. Das Fahrzeug setzt sich aber auch am Hang nicht in Bewegung, weil das Drehmoment am Abtrieb über den Hydrostaten H1 in gestreckter Lage abgestützt wird. Durch die Anordnung der Kupplungseinrichtung KV und KR zwischen PLG 18 und Energiewandler H2 ergibt sich schließlich eine "automatische" Verdrehung der Kupplungen KV/KR beim Schalten. Solange eine der Kupplungen KV/KR geschlossen ist, treibt die Brennkraftmaschine 14 den als Pumpe fungierenden Hydromotor H1 in gestreckter Lage an. Die Sonnenradwelle Z1 der Planetengetriebeanordnung 18 stützt sich am stehenden Fahrzeug ab. Wenn beim Schalten beide Kupplungen KV/KR öffnen, verlangsamt sich die Drehbewegung an der Pumpe H1, weil deren Schleppmoment das Hohlrad Z3 abbremst und die Brennkraftmaschine 14 beginnt, die nunmehr offene Reversierstufe 32 zu beschleunigen. Somit kann das Leistungsverzweigungsgetriebe 30 derart gesteuert werden, dass beim Umschalten zwischen Vorwärts- und Rückwärtsfahrt die KR-Kupplung bereits mit Druck beaufschlagt wird, bevor die KV-Kupplung öffnet. Die KR-Kupplung wird dann in vielen Fällen noch nicht schließen, weil sie Zahn auf Zahn steht. Wenn dann die KV-Kupplung öffnet, verdreht die Brennkraftmaschine 14 die Klauen der KR-Kupplung gegeneinander, so dass diese in die nächste freie Zahnlücke rutschen.

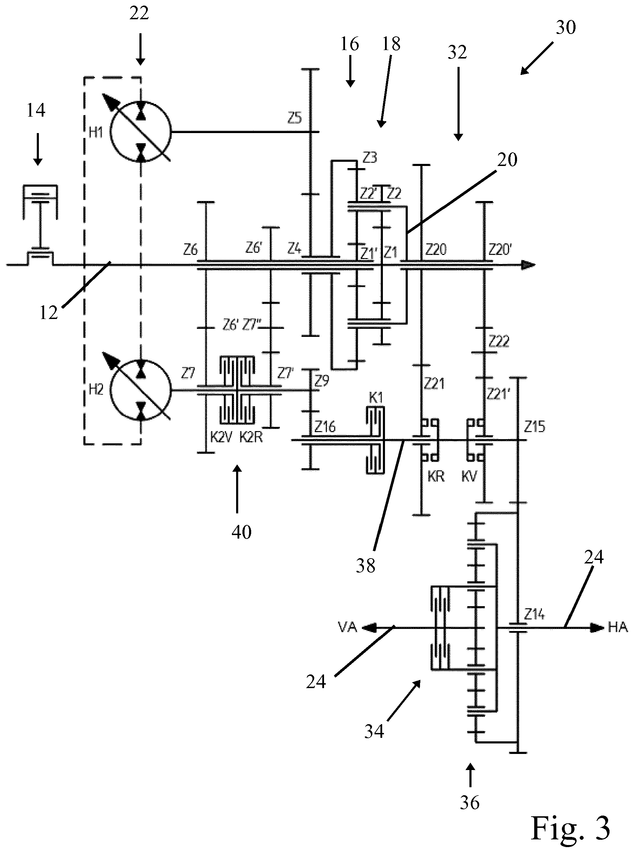

Fig. 3 zeigt eine Prinzipdarstellung eines dritten Ausführungsbeispiels des erfindungsgemäßen Leistungsverzweigungsgetriebes 30, bei welchem eine dem ersten Zweig 16 zugeordnete erste Reversierstufe 32 und eine dem zweiten Zweig 22 zugeordnete zweite Reversierstufe 40 vorgesehen ist. Im ersten Vorwärts- und Rückwärtsfahrbereich funktioniert das Leistungsverzweigungsgetriebe 30 bei dieser Ausführungsvariante so, wie es im Zusammenhang mit dem zweiten Ausführungsbeispiel beschrieben wurde. Gleiches gilt für den Wechsel vom ersten in den zweiten Vorwärtsfahrbereich.

Wenn die Höchstgeschwindigkeit des ersten Vorwärtsfahrbereichs bei korrespondierender Rückwärtsfahrt erreicht wird, befindet sich der als Pumpe fungierende Hydromotor H1 voll ausgeschwenkt in Richtung "rückwärts", während der Hydromotor H2 sich in gestreckter Lage befindet. Wie bereits erwähnt wurde, genügt es für viele Anwendungen, dass nur der erste Vorwärtsfahrbereich voll reversierbar ist und somit ohne Blindleistung betrieben werden kann, wie dies im zweiten Ausführungsbeispiel gezeigt wurde.

Soll das Kraftfahrzeug jedoch vorwärts wie rückwärts dieselbe Geschwindigkeit erreichen können, benötigt das Leistungsverzweigungsgetriebe 30 in dieser Anordnung die zweite Reversierstufe 40. Damit der Motor H2 beim Übergang vom ersten Fahrbereich zum zweiten Fahrbereich (V/R) zur Pumpe werden kann, muss er seinerseits in entgegen gesetzter Richtung ausgeschwenkt werden, sobald die Kupplungseinrichtung K1 geöffnet wird.

Dann passt aber seine Drehrichtung nicht mehr zu derjenigen des Hydrostaten H1 und muss also ebenfalls umgedreht werden. Dies wird durch die zweite Reversierstufe 40 mit der Zahnradpaarung Z6'/Z7"/Z7' erreicht. Das Leistungsverzweigungsgetriebe 30 ist somit auch im zweiten Fahrbereich vollständig und blindleistungsfrei reversierbar, indem die Pumpe H2, der Motor H1 und der Abtrieb über Z20/Z21 in umgekehrter Drehrichtung drehen. Die Kupplungen K2V, K2R sind als Teil der zweiten Reversierstufe 40 zwischen den Zahnradpaarungen Z6/Z7 und Z6'/Z7"/Z7' angeordnet und vorliegend als kompakte Baugruppe zusammengefasst. Im zweiten Vorwärtsgang wird die Kupplung K2V geschlossen, während die Kupplung K2R geöffnet wird, im zweiten Rückwärtsgang wird die Kupplung K2R geschlossen, während die andere Kupplung K2V geöffnet wird.

Es ist zu betonen, dass im Rahmen der Erfindung verschiedene konstruktive Varianten des Leistungsverzweigungsgetriebes 30 vorgesehen sein können. So kann beispielsweise die Kupplungseinrichtung K1 alternativ auch beim Zahnrad Z9 angeordnet werden. Alternativ oder zusätzlich können die Kupplungseinrichtungen K2V/K2R der zweiten Reversierstufe 40 auch bei der Zahnradpaarung Z6/Z6' angeordnet werden. In erster Linie sollte lediglich darauf geachtet werden, dass der Hydrostat H2 mit dem zweiten Sonnenrad Z1' in gegensätzlichen Drehrichtungen verbindbar gemacht werden kann und dass der Hydrostat H2 über die Kupplungseinrichtung K1 nach der Reversierung des mechanischen Zweigs 16 mit dem Abtrieb 24 verbunden werden kann. Ebenso sollte der Steg-Abtrieb der Planetengetriebeanordnung 18 in gegensätzlichen Drehrichtungen mit dem Abtrieb 24 verbindbar gemacht werden.

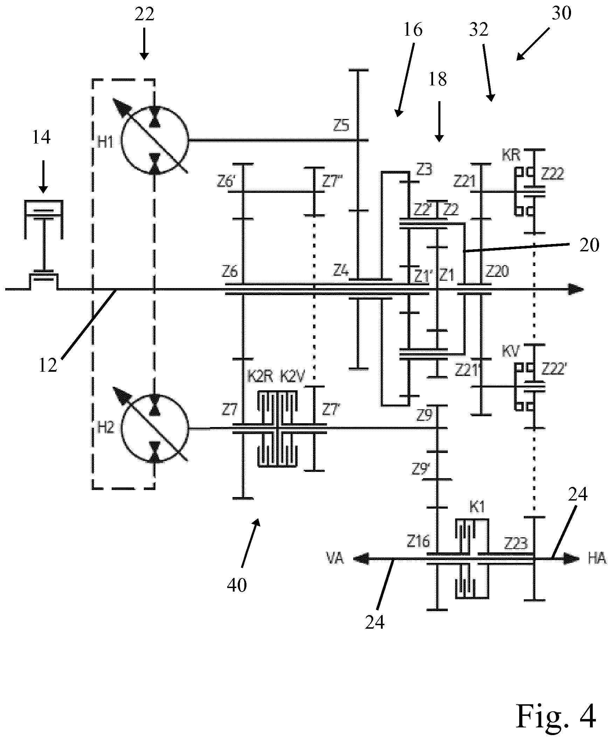

Fig. 4 zeigt eine Prinzipdarstellung eines vierten Ausführungsbeispiels des erfindungsgemäßen Leistungsverzweigungsgetriebes 30. Die allgemeine Funktionsweise des vierten Ausführungsbeispiels entspricht grundsätzlich der des dritten Ausführungsbeispiels, wobei das vierte Ausführungsbeispiel insbesondere eine noch kompaktere Bauform der Reversierstufe 32 und der weiteren Reversierstufe 40 besitzt und kein separates Differentialgetriebe 34 aufweist. Man erkennt, dass insbesondere die Zahnradpaarungen Z7/Z6/Z6' und Z7'/Z7" der zweiten Reversierstufe 40 im Vergleich zum dritten Ausführungsbeispiel unterschiedlich angeordnet sind. Weiterhin wurde die im dritten Ausführungsbeispiel gezeigte Kupplungseinrichtung K1 in den Bereich der Abtriebswelle 24 (VA/HA) verlegt und über ein zusätzliches Zahnrad Z9' mit dem zweiten Hydrostaten H2 gekoppelt, wodurch sich eine abweichende Ausgestaltung der zweiten Reversierstufe 40 ergibt. Weiterhin unterscheidet sich die erste Reversierstufe 32 im Hinblick auf die Klauenkupplungen KR und KV im Aufbau von der im Zusammenhang mit dem dritten Ausführungsbeispiel beschriebenen ersten Reversierstufe 32. So ist die Stegwelle 20 mit dem Zahnrad Z20 verbunden, welches seinerseits mit den Zahnrädern Z21 und Z21' kämmt. Diese sind über die Klauenkupplungen KR bzw. KV mit den Zahnrädern Z22 bzw. Z22' koppelbar und wirken über das Zahnrad Z23 auf die Kupplungseinrichtung K1, die anderenends über die Zahnradpaarung Z16/Z9/'Z9 mit der zweiten Reversierstufe 40 in Wirkverbindung steht.

## Patentansprüche

1. Leistungsverzweigungsgetriebe (30) für ein Kraftfahrzeug, insbesondere für eine selbstfahrende Arbeitsmaschine, umfassend:
- zumindest eine Antriebswelle (12), welche zum Einspeisen von Drehmoment mit einer Brennkraftmaschine (14) verbindbar ist;
- einen ersten Zweig (16), der eine Planetengetriebeanordnung (18) mit zumindest zwei Sonnenrädern (Z1, Z1'), einem Hohlrad (Z3) und einer Stegwelle (20) umfasst, auf der Doppelplanetenräder (Z2, Z2') angeordnet sind, die mit den Sonnenrädern (Z1, Z1') und mit dem Hohlrad (Z3) kämmen, wobei zumindest eines der Sonnenräder (Z1) mit der Antriebswelle (12) gekoppelt ist;
- einen stufenlos verstellbaren zweiten Zweig (22), der zumindest teilweise über die Planetengetriebeanordnung (18) mit dem ersten Zweig (16) verbindbar ist und wenigstens zwei verstellbare hydraulische rotatorische Energiewandler (H1, H2) oder wenigstens zwei verstellbare elektrische rotatorische Energiewandler (H1, H2) umfasst, die miteinander energetisch koppelbar und jeweils in beide Richtungen als Motor oder Pumpe bzw. Generator betreibbar sind; und
- zumindest eine Abtriebswelle (24), welche über den ersten Zweig (16) und den zweiten Zweig (22) mit der Antriebswelle (12) koppelbar ist;
wobei zwischen der Antriebswelle (12) und der Abtriebswelle (24) zumindest eine erste Reversierstufe (32) zum Wechseln zwischen zumindest einem ersten Vorwärtsfahrbereich und zumindest einem ersten Rückwärtsfahrbereich vorgesehen ist, wobei die Reversierstufe (32) die Drehrichtungen der Sonnenräder (Z1, Z1'), des Hohlrads (Z3) und der Stegwelle (20) beim Wechseln zwischen dem ersten Vorwärtsfahrbereich und dem ersten Rückwärtsfahrbereich alle umkehrt,
**dadurch gekennzeichnet, dass**
die erste Reversierstufe (32) ausgebildet ist, eine Drehrichtung eines Abtriebs der Planetengetriebeanordnung (18) relativ zu einer Drehrichtung des zweiten Energiewandlers (H2) umzukehren.

2. Leistungsverzweigungsgetriebe (30) nach Anspruch 1,
**dadurch gekennzeichnet, dass**
die erste Reversierstufe (32) am Abtrieb der Planetengetriebeanordnung (18) angeordnet und insbesondere mit der Stegwelle (20) der Planetengetriebeanordnung (18) gekoppelt ist.

3. Leistungsverzweigungsgetriebe (30) nach Anspruch 1 oder 2,
**dadurch gekennzeichnet, dass**
zwischen einer Abtriebsseite der Planetengetriebeanordnung (18) und der Abtriebswelle (24) wenigstens ein erstes Kupplungselement (KV) und ein zweites Kupplungselement (KR) vorgesehen sind, wobei im ersten Vorwärtsfahrbereich Drehmoment über das erste Kupplungselement (KV) und im ersten Rückwärtsfahrbereich Drehmoment über das zweite Kupplungselement (KR) zu übertragen ist.

4. Leistungsverzweigungsgetriebe (30) nach einem der Ansprüche 1 bis 3,
**dadurch gekennzeichnet, dass**
die erste Reversierstufe (32) eine erste Zahnradpaarung mit einer geraden Anzahl gepaarter Zahnräder (Z20,Z21) und eine zweite Zahnradpaarung mit einer ungeraden Anzahl gepaarter Zahnräder (Z20', Z22, Z21') umfasst und ausgebildet ist, Drehmoment beim Wechseln zwischen Vorwärtsfahrbereich und Rückwärtsfahrbereich entweder über die erste oder über die zweite Zahnradpaarung von der Planetengetriebeanordnung (18) an die Abtriebswelle (24) zu übertragen.

5. Leistungsverzweigungsgetriebe (30) nach einem der Ansprüche 1 bis 4,
**dadurch gekennzeichnet, dass**
die erste Reversierstufe (32) als vormontierbare Modulbaugruppe ausgebildet ist.

6. Leistungsverzweigungsgetriebe (30) nach einem der Ansprüche 1 bis 5,
**dadurch gekennzeichnet, dass**
zwischen der ersten Reversierstufe (32) und der wenigstens einen Abtriebwelle (24) ein vorzugsweise mittels einer Differentialsperre (36) sperrbares Differentialgetriebe (34) vorgesehen ist, mittels welchem ein Drehmoment zwischen einer ersten Abtriebswelle (24VA) und einer zweiten Abtriebswelle (24HA) aufteilbar ist.

7. Leistungsverzweigungsgetriebe (30) nach einem der Ansprüche 1 bis 6,
**dadurch gekennzeichnet, dass**
der erste Energiewandler (H1) und der zweite Energiewandler (H2) beim Wechseln zwischen dem ersten Vorwärtsfahrbereich und einem zweiten Vorwärtsfahrbereich ihre Funktion tauschen und/oder dass der erste Energiewandler (H1) und der zweite Energiewandler (H2) beim Wechseln zwischen dem ersten Vorwärtsfahrbereich und dem ersten Rückwärtsfahrbereich ihre Funktion beibehalten und/oder dass der erste Energiewandler (H1) und der zweite Energiewandler (H2) im ersten Vorwärtsfahrbereich und im ersten Rückwärtsfahrbereich jeweils gleichartig betrieben werden.

8. Leistungsverzweigungsgetriebe (30) nach einem der Ansprüche 1 bis 7,
**dadurch gekennzeichnet, dass**
der zweite Energiewandler (H2) vorzugsweise mittels einer Kupplungseinrichtung (K1) mit einer Abtriebswelle (38) koppelbar und von der Abtriebswelle (38) entkoppelbar ist.

9. Leistungsverzweigungsgetriebe (30) nach einem der Ansprüche 1 bis 8,
**dadurch gekennzeichnet, dass**
eine zweite Reversierstufe (40) zum Wechseln zwischen dem ersten Rückwärtsfahrbereich und einem zweiten Rückwärtsfahrbereich vorgesehen ist.

10. Leistungsverzweigungsgetriebe (30) nach Anspruch 9,
**dadurch gekennzeichnet, dass**
die zweite Reversierstufe (40) ausgebildet ist, eine Drehrichtung des zweiten Sonnenrads (Z1') relativ zur Drehrichtung des zweiten Energiewandlers (H2) umzukehren.

11. Leistungsverzweigungsgetriebe (30) nach Anspruch 9 oder 10,
**dadurch gekennzeichnet, dass**
die zweite Reversierstufe (40) zwischen dem zweiten Energiewandler (H2) und der Planetengetriebeanordnung (18) angeordnet ist.

12. Leistungsverzweigungsgetriebe (30) nach einem der Ansprüche 9 bis 11,
**dadurch gekennzeichnet, dass**
die erste Reversierstufe (32) dem ersten Zweig (16) und die zweite Reversierstufe (40) dem zweiten Zweig (22) zugeordnet ist.

13. Leistungsverzweigungsgetriebe (30) nach einem der Ansprüche 9 bis 12 wenn abhängig von Anspruch 7,
**dadurch gekennzeichnet, dass**
der erste Energiewandler (H1) und der zweite Energiewandler (H2) beim Wechseln zwischen dem ersten Rückwärtsfahrbereich und dem zweiten Rückwärtsfahrbereich ihre Funktion tauschen und/oder dass der erste Energiewandler (H1) im zweiten Rückwärtsfahrbereich umgekehrt betrieben wird als im zweiten Vorwärtsfahrbereich.

14. Leistungsverzweigungsgetriebe (30) nach einem der Ansprüche 1 bis 13,
**dadurch gekennzeichnet, dass**
wenigstens zwei Kupplungselemente (K2V, K2R) in einer gemeinsamen Baugruppe zusammengefasst sind.

## Claims

1. Power split gearbox (30) for a motor vehicle, in particular for a self-propelled work machine, including:
- at least one drive shaft (12), which is connectible to an internal combustion engine (14) for inputting torque;
- a first branch (16), which includes a planetary gear mechanism arrangement (18) with at least two sun gears (Z1, Z1'), an internal gear (Z3) and a spider shaft (20), on which dual planetary gears (Z2, Z2') are disposed, which mesh with the sun gears (Z1, Z1') and with the internal gear (Z3), wherein at least one of the sun gears (Z1) is coupled to the drive shaft (12);
- an infinitely variable second branch (22), which can at least partially be connected to the first branch (16) via the planetary gear mechanism arrangement (18) and includes at least two adjustable hydraulic rotational energy converters (H1, H2) or at least two adjustable electrical rotational energy converters (H1, H2), which can be energetically coupled to each other and are each operable in both directions as a motor or a pump or generator, respectively; and
- at least one output shaft (24), which can be coupled to the drive shaft (12) via the first branch (16) and the second branch (22);
wherein at least one first reversing stage (32) for changing between at least one first forward driving range and at least one first reverse driving range is provided between the drive shaft (12) and the output shaft (24), wherein the reversing stage (32) reverses all of the rotational directions of the sun gears (Z1, Z1'), of the internal gear (Z3) and the spider shaft (20) upon changing between the first forward driving range and the first reverse driving range,
**characterized in that**
the first reversing stage (32) is configured to reverse a rotational direction of an output of the planetary gear mechanism arrangement (18) relative to a rotational direction of the second energy converter (H2).

2. Power split gearbox (30) according to claim 1,
**characterized in that**
the first reversing stage (32) is disposed at the output of the planetary gear mechanism arrangement (18) and in particular coupled to the spider shaft (20) of the planetary gear mechanism arrangement (18).

3. Power split gearbox (30) according to claim 1 or 2,
**characterized in that**
at least one first clutch element (KV) and one second clutch element (KR) are provided between an output side of the planetary gear mechanism arrangement (18) and the output shaft (24), wherein torque is to be transmitted via the first clutch element (KV) in the first forward driving range and torque is to be transmitted via the second clutch element (KR) in the first reverse driving range.

4. Power split gearbox (30) according to any one of claims 1 to 3,
**characterized in that**
the first reversing stage (32) includes a first gear pairing with an even number of paired gears (Z20, Z21) and a second gear pairing with an odd number of paired gears (Z20', Z22, Z21') and is formed to transmit torque from the planetary gear mechanism arrangement (18) to the output shaft (24) either via the first or via the second gear pairing upon changing between forward driving range and reverse driving range.

5. Power split gearbox (30) according to any one of claims 1 to 4,
**characterized in that**
the first reversing stage (32) is formed as a pre-mountable module assembly.

6. Power split gearbox (30) according to any one of claims 1 to 5,
**characterized in that**
a differential gear (34) preferably lockable by means of a differential lock (36) is provided between the first reversing stage (32) and the at least one output shaft (24), by means of which a torque can be divided between a first output shaft (24VA) and a second output shaft (24HA).

7. Power split gearbox (30) according to any one of claims 1 to 6,
**characterized in that**
the first energy converter (H1) and the second energy converter (H2) exchange their function upon change between the first forward driving range and a second forward driving range and/or that the first energy converter (H1) and the second energy converter (H2) maintain their function upon change between the first forward driving range and the first reverse driving range and/or that the first energy converter (H1) and the second energy converter (H2) are each similarly operated in the first forward drive range and in the first reverse driving range.

8. Power split gearbox (30) according to any one of claims 1 to 7,
**characterized in that**
the second energy converter (H2) can be coupled to an output shaft (38) and decoupled from the output shaft (38) preferably by means of a clutch device (K1).

9. Power split gearbox (30) according to any one of claims 1 to 8,
**characterized in that**
a second reversing stage (40) is provided for changing between the first reverse driving range and a second reverse driving range.

10. Power split gearbox (30) according to claim 9,
**characterized in that**
the second reversing stage (40) is formed to reverse a rotational direction of the second sun gear (Z1') relative to the rotational direction of the second energy converter (H2).

11. Power split gearbox (30) according to claim 9 or 10,
**characterized in that**
the second reversing stage (40) is disposed between the second energy converter (H2) and the planetary gear mechanism arrangement (18).

12. Power split gearbox (30) according to any one of claims 9 to 11,
**characterized in that**
the first reversing stage (32) is associated with the first branch (16) and the second reversing stage (40) is associated with the second branch (22).

13. Power split gearbox (30) according to any one of claims 9 to 12, if depending on claim 7,
**characterized in that**
the first energy converter (H1) and the second energy converter (H2) exchange their function upon change between the first reverse driving range and the second reverse driving range and/or that the first energy converter (H1) is reversely operated in the second reverse driving range to the second forward driving range.

14. Power split gearbox (30) according to any one of claims 1 to 13,
**characterized in that**
at least two clutch elements (K2V, K2R) are combined in a common assembly group.

## Revendications

1. Transmission à dérivation de puissance (30) pour un véhicule à moteur, en particulier pour une machine de travail automotrice, comprenant :
- au moins un arbre d'entraînement (12), lequel peut être relié à un moteur à combustion interne (14) pour fournir le couple moteur ;
- une première branche (16), qui comporte un ensemble d'engrenages planétaires (18) doté d'au moins deux roues solaires (Z1, Z1'), une roue à denture intérieure (Z3) et un arbre à nervure (20), disposés sur les doubles roues planétaires (Z2, Z2'), qui engrènent avec les roues solaires (Z1, Z1') et la roue à denture intérieure (Z3), où au moins l'une des roues solaires (Z1) est couplée avec l'arbre d'entraînement (12) ;
- une seconde branche réglable en continu (22), qui peut être reliée au moins en partie avec la première branche (16) à l'aide de l'ensemble d'engrenages planétaires (18), et qui comprend au moins deux convertisseurs d'énergie hydrauliques réglables (H1, H2) ou au moins deux convertisseurs d'énergie rotatifs électriques réglables (H1, H2), lesquels peuvent être couplés ensemble sur le plan énergétique et utilisés dans les deux sens en tant que moteur/pompe ou générateur ; et
- au moins un arbre de sortie (24), lequel peut être couplé avec l'arbre d'entraînement (12) au moyen de la première branche (16) et de la deuxième branche (22) ;
où au moins un premier palier d'inversion (32) est prévu entre l'arbre d'entraînement (12) et l'arbre de sortie (24) pour passer d'au moins une première plage de marche avant à au moins une première plage de marche arrière, où ledit palier d'inversion (32) inverse les sens de rotation des roues solaires (Z1, Z1'), de la roue à denture intérieure (Z3) et de l'arbre à nervure (20) lors du passage de la première plage de marche avant à la première plage de marche arrière,
**caractérisée en ce que**
le premier palier d'inversion (32) est conçu de sorte à inverser un sens de rotation d'une sortie de l'ensemble d'engrenages planétaires (18) par rapport à un sens de rotation du deuxième convertisseur d'énergie (H2).

2. Transmission à dérivation de puissance (30) selon la revendication 1
**caractérisée en ce que**
le premier palier d'inversion (32) est disposé au niveau de la sortie de l'ensemble d'engrenages planétaires (18) et, en particulier, couplé avec l'arbre à nervure (20) de l'ensemble d'engrenages planétaires (18).

3. Transmission à dérivation de puissance (30) selon la revendication 1 ou 2
**caractérisée en ce que**
entre un côté sortie de l'ensemble d'engrenages planétaires (18) et l'arbre de sortie (24), au moins un premier élément d'accouplement (KV) et un deuxième élément d'accouplement (KR) sont prévus, où le couple est transmis par le premier élément d'accouplement (KV) dans la première plage de marche avant et par le deuxième élément d'accouplement (KR) dans la première plage de marche arrière.

4. Transmission à dérivation de puissance (30) selon une des revendications 1 à 3,
**caractérisée en ce que**
le premier palier d'inversion (32) comprend un premier couple d'engrenages avec un nombre pair de roues dentées couplées (Z20, Z21) et un deuxième couple d'engrenages avec un nombre impair de roues dentées couplées (Z20', Z22, Z21') et est conçu de sorte à transmettre le couple de l'ensemble d'engrenages planétaires (18) à l'arbre de sortie (24) lors du passage de la plage de marche avant
à la plage de marche arrière par l'intermédiaire du premier ou du deuxième couple d'engrenages.

5. Transmission à dérivation de puissance (30) selon une des revendications 1 à 4,
**caractérisée en ce que**
le premier palier d'inversion (32) est conçu sous forme d'assemblage modulaire prémonté.

6. Transmission à dérivation de puissance (30) selon une des revendications 1 à 5,
**caractérisée en ce que**
entre le premier palier d'inversion (32) et le ou les arbres de sortie (24), un différentiel (34) verrouillable de préférence à l'aide d'un blocage du différentiel (36)
est prévu, au moyen duquel un couple peut être réparti entre le premier arbre de sortie (24VA) et un deuxième arbre de sortie (24HA).

7. Transmission à dérivation de puissance (30) selon une des revendications 1 à 6,
**caractérisée en ce que**
le premier convertisseur d'énergie (H1) et le deuxième convertisseur d'énergie (H2) intervertissent leurs fonctions lors du passage de la première plage de marche avant à une deuxième plage de marche avant et/ou que le premier
convertisseur d'énergie (H1) et le deuxième convertisseur d'énergie (H2) conservent leurs fonctions lors du passage de la première plage de marche avant à la première plage de marche arrière et/ou que le premier convertisseur d'énergie (H1) et le deuxième convertisseur d'énergie (H2) sont utilisés de façon identique dans la première plage de marche avant et dans la première plage de marche arrière.

8. Transmission à dérivation de puissance (30) selon une des revendications 1 à 7,
**caractérisée en ce que**
le deuxième convertisseur d'énergie (H2) peut être couplé avec un arbre de sortie (38) et découplé dudit arbre de sortie (38) de préférence à l'aide d'un dispositif d'accouplement (K1).

9. Transmission à dérivation de puissance (30) selon une des revendications 1 à 8,
**caractérisée en ce que**
un deuxième palier d'inversion (40) est prévu pour passer de la première plage de marche arrière à une deuxième plage de marche arrière.

10. Transmission à dérivation de puissance (30) selon la revendication 9
**caractérisée en ce que**
le deuxième palier d'inversion (40) est conçu de sorte à inverser un sens de rotation de la deuxième roue solaire (Z1') par rapport au sens de rotation du deuxième convertisseur d'énergie (H2).

11. Transmission à dérivation de puissance (30) selon la revendication 9 ou 10
**caractérisée en ce que**
le deuxième palier d'inversion (40) est disposé entre le deuxième convertisseur d'énergie (H2) et l'ensemble d'engrenages planétaires (18).

12. Transmission à dérivation de puissance (30) selon une des revendications 9 à 11,
**caractérisée en ce que**
le premier palier d'inversion (32) est affecté à la première branche (16) et le deuxième palier d'inversion (40), à la deuxième branche (22).

13. Transmission à dérivation de puissance (30) selon une des revendications 9 à 12 et fonction de la revendication 7,
**caractérisée en ce que**
le premier convertisseur d'énergie (H1) et le deuxième convertisseur d'énergie (H2) intervertissent leurs fonctions lors du passage de la première plage de marche arrière à la deuxième
plage de marche arrière et/ou que le premier convertisseur d'énergie (H1) est utilisé dans le sens inverse dans la deuxième plage de marche arrière par rapport à la deuxième plage de marche avant.

14. Transmission à dérivation de puissance (30) selon une des revendications 1 à 13, **caractérisée en ce que**
au moins deux éléments d'accouplement (K2V, K2R) sont regroupés dans un assemblage commun.
